# EUROPEAN PATENT APPLICATION

(11) **EP 4 530 839 A1**
(43) Date of publication of application: **02.04.2025**
(21) Application number: 23859305.7
(22) Date of filing: 28.08.2023
(51) Int. Cl.: G06F 9/455

(54) **DISPLAY METHOD AND ELECTRONIC DEVICE**

(30) Priority: 02.09.2022 CN 202211073568; 30.09.2022 CN 202211214787
(71) Applicant: Huawei Technologies Co., Ltd., Shenzhen, Guangdong 518129 (CN)
(72) Inventor: HE, Jialong, Shenzhen, Guangdong 518129 (CN); LIU, Lin, Shenzhen, Guangdong 518129 (CN)
(74) Representative: MERH-IP Matias Erny Reichl Hoffmann Patentanwälte PartG mbB
(86) International application number: PCT/CN2023/115281
(87) International publication number: WO 2024/046275

(57) **Abstract**

Embodiments of this application provide a display method and an electronic device. The method may be applied to an electronic device, a one-to-one mapping relationship between an emoji and a code point is preset in the electronic device, and the method includes: receiving first data sent by another electronic device; determining whether an emoji corresponding to the first data is a single emoji; when determining that the first data does not correspond to a single emoji, replacing, with a target private area code point corresponding to the first data, a combination of a plurality of code points that form a combined emoji corresponding to the first data; and displaying, based on the target private area code point, the combined emoji corresponding to the first data. In this technical solution, the combined emoji may be uniquely determined based on the private area code point. This can avoid overheads of a running memory caused by parsing a plurality of code segments when the electronic device displays the combined emoji, and can reduce memory overheads caused when the electronic device displays the combined emoji.

## Description

This application claims priority to Chinese Patent Application No. 202211073568.7, filed with the China National Intellectual Property Administration on September 2, 2022 and entitled "EMOJI FILE DISPLAY METHOD AND ELECTRONIC DEVICE", and to Chinese Patent Application No. 202211214787.2, filed with the China National Intellectual Property Administration on September 30, 2022 and entitled "DISPLAY METHOD AND ELECTRONIC DEVICE", both of which are incorporated herein by reference in their entireties.

### TECHNICAL FIELD

Embodiments of this application relate to the field of electronic technologies, and more specifically, to a display method and an electronic device.

### BACKGROUND

In a process in which an electronic device is used by a user, some emojis often need to be displayed. For example, emojis are displayed on a smartwatch.

An emoji can independently represent a single emoji, and can also form a combined emoji through an attribute change or together with another emoji. Therefore, a code point corresponding to one emoji may correspond to a plurality of emojis. When the electronic device receives data including one emoji, the electronic device needs to further parse the data to determine a target emoji that finally needs to be displayed. This causes large occupation of a running memory of the electronic device.

### SUMMARY

Embodiments of this application provide a display method and an electronic device.

According to a first aspect, a display method is provided, where the method is applied to an electronic device, one-to-one mapping relationships between emojis and code points are preset in the electronic device, and the method includes: The electronic device receives first data sent by another electronic device. The electronic device determines whether an emoji corresponding to the first data is a single emoji. When determining that the first data does not correspond to a single emoji, the electronic device replaces, with a target private area code point corresponding to the first data, a combination of a plurality of code points that form a combined emoji corresponding to the first data. The electronic device displays, based on the target private area code point, the combined emoji corresponding to the first data.

In an embodiment of this application, the electronic device stores the one-to-one mapping relationship between an emoji and a code point, so that an emoji and a code point are in a one-to-one correspondence. In this way, when receiving the first data, the electronic device may uniquely determine a corresponding emoji based on a code point. This avoiding overheads of a running memory caused by parsing a plurality of code segments when the electronic device displays the combined emoji.

In this embodiment of this application, after receiving the first data, the electronic device may first determine whether the emoji corresponding to the first data is a single emoji. When determining that the emoji is not a single emoji, the electronic device replaces, with the target private area code point corresponding to the first data, the combination of the plurality of code points that form the combined emoji corresponding to the first data, so that the electronic device may determine, based on the target private area code point, the combined emoji that needs to be displayed, and display the combined emoji. In this technical solution, the combined emoji may be uniquely determined based on the private area code point. This can avoid overheads of running memory caused by displaying the combined emoji when the electronic device parses a plurality of code segments, and can reduce memory overheads caused when the electronic device displays the combined emoji.

With reference to the first aspect, in an implementation of the first aspect, before the replacing, with a target private area code point corresponding to the first data, a combination of a plurality of code points that form a combined emoji corresponding to the first data, the method further includes: The electronic device determines, from a first mapping relationship between a combination of a plurality of corresponding code points that from a combined emoji and a private area code point, the target private area code point corresponding to the first data, where the first mapping relationship is preset in the electronic device.

Based on this embodiment of this application, the electronic device may pre-store the first mapping relationship between a combination of a plurality of code points corresponding to a combined emoji and a private area code point. For example, the first mapping relationship is stored in code of the electronic device. In this case, the electronic device may determine, from the first mapping relationship, the target private area code point corresponding to the first data.

With reference to the first aspect, in an implementation of the first aspect, the mapping relationship includes a second mapping relationship between a single emoji and a code point and a third mapping relationship between a combination of a plurality of code points that form a combined emoji and a private area code point, and the mapping relationship is preset in a font file of the electronic device.

Based on this embodiment of this application, the font file of the electronic device includes a mapping relationship between a single emoji and a code point, and a mapping relationship between a combination of a plurality of code points that form a combined emoji and a private area code point. Therefore, the electronic device may include one-to-one mapping relationships between all emojis and code points, so that the electronic device can display all emojis.

With reference to the first aspect, in an implementation of the first aspect, that the electronic device displays, based on the target private area code point, the combined emoji corresponding to the first data includes: The electronic device determines the combined emoji based on the target private area code point and the first mapping relationship. The electronic device displays the combined emoji.

Based on this embodiment of this application, the electronic device may perform matching, based on the target private area code point and the mapping relationship between a combination of a plurality of code points corresponding to a combined emoji and the private area code point, to determine a plurality of code points corresponding to the combined emoji, to determine the combined emoji.

With reference to the first aspect, in an implementation of the first aspect, the method further includes: The electronic device replaces, with a first pointer, the combination of the plurality of code points of the combined emoji corresponding to the first data in the first mapping relationship; and that the electronic device determines the combined emoji based on the target private area code point and the first mapping relationship includes: The electronic device determines the combined emoji based on address information pointed to by the first pointer.

Based on this embodiment of this application, the electronic device may write UTF-8 encoded data of each combined emoji into a global variable, each private area code point corresponds to a pointer, and the pointer may be used to point to address information of UTF-8 encoded data of one combined emoji, and stores a mapping between the private area code point and the pointer. When displaying the combined emoji, the electronic device may access the corresponding UTF-8 encoded data through the pointer. Therefore, there is no need to store UTF-8 encoded data of a specific combined emoji. This reduces memory occupation of the electronic device.

With reference to the first aspect, in an implementation of the first aspect, when the electronic device determines that an emoji corresponding to the first data is a single emoji, the method further includes: The electronic device determines the single emoji based on a code point corresponding to the first data and the second mapping relationship. The electronic device displays the single emoji.

Based on this embodiment of this application, the electronic device further stores the second mapping relationship between a single emoji and a code point. When determining that the first data corresponds to the single emoji, the electronic device may further display the single emoji. In this technical solution, the electronic device may display both a single emoji and a combined emoji.

With reference to the first aspect, in an implementation of the first aspect, before that the electronic device determines whether an emoji corresponding to the first data is a single emoji, the method further includes: determining, based on a code segment range corresponding to the first data, that the first data corresponds to an emoji.

It should be understood that an emoji has a code segment range, and all code points belonging to the code segment range correspond to the emoji. When the first data falls within the code segment range, it may be determined that the first data corresponds to the emoji.

Based on this embodiment of this application, after receiving the first data, the electronic device may first determine whether the first data corresponds to the emoji. This facilitates subsequent emoji display.

With reference to the first aspect, in an implementation of the first aspect, before that the electronic device receives first data sent by another electronic device, the method further includes: The electronic device maps the combination of the plurality of code points that form the combined emoji to the private area code point. The electronic device presets, into the font file of the electronic device, the second mapping relationship of mapping the combination of the plurality of code points that form the combined emoji to the private area code point.

Based on this embodiment of this application, the electronic device may map a combination of a plurality of code points corresponding to one combined emoji to one private area code point, to implement unique mapping between the combined emoji and the private area code point, therefore, the electronic device can quickly and uniquely determine the combined emoji.

According to a second aspect, a display apparatus is provided, including a module configured to implement the display method according to any one of claims 1 to 8.

According to a third aspect, an electronic device is provided, including one or more processors and one or more memories. The one or more memories store one or more computer programs. The one or more computer programs include instructions. When the instructions are executed by the one or more processors, the display method according to the first aspect and any possible implementation of the first aspect is performed.

With reference to the third aspect, in an implementation of the third aspect, the electronic device is a smartwatch.

According to a fourth aspect, a chip is provided. The chip includes a processor and a communication interface, the communication interface is configured to receive a signal and transmit the signal to the processor, and the processor processes the signal, so that the display method according to the first aspect and any possible implementation of the first aspect is performed.

According to a fifth aspect, a computer-readable storage medium is provided, where the computer-readable storage medium stores computer instructions, and when the computer instructions are run on a computer, the display method according to the first aspect and any possible implementation of the first aspect is performed.

According to a sixth aspect, a computer program product is provided. The computer program product includes computer program code, and when the computer program code is run on a computer, the display method according to the first aspect and any possible implementation of the first aspect is performed.

### BRIEF DESCRIPTION OF DRAWINGS

FIG. 1 is a diagram of a scenario to which an embodiment of this application is applicable;
FIG. 2 is a diagram of an emoji according to an embodiment of this application;
FIG. 3 is a schematic flowchart of displaying an emoji according to an embodiment of this application;
FIG. 4 is a schematic flowchart of a font file creating method according to an embodiment of this application.
FIG. 5 is a schematic flowchart of a display method according to an embodiment of this application;
FIG. 6 is a schematic flowchart of a display method according to an embodiment of this application; and
FIG. 7 is a block diagram of an electronic device according to an embodiment of this application.

### DESCRIPTION OF EMBODIMENTS

The following describes technical solutions of embodiments in this application with reference to accompanying drawings.

An electronic device in embodiments of this application may be a wearable device, for example, a band or a sports watch. Alternatively, the electronic device may be another Internet of Things (Internet of Things, IOT) device with a display, or the like. Alternatively, the electronic device may be user equipment, a remote terminal, a mobile device, a user terminal, a terminal, a handheld device with a wireless communication function, a terminal device in a future 5G network, a terminal device in a future evolved public land mobile communications network (public land mobile network, PLMN), or the like. This is not limited in embodiments of this application.

Before the technical solutions of this application are described, the following technical terms that may be used in the solutions of this application are first briefly described.

An emoji (emoji) is a visual emotion symbol, and may be used to represent a plurality of expressions. For example, a smiley face represents a smile, and a cake represents food. A user often uses an emoji for communication on an electronic device.

Unicode (unicode) may also be referred to as unicode or unicode, and is an industry standard in the field of computer science, including a character set, a coding scheme, and the like.

Code point: A unicode character set is represented by one or more two-dimensional tables consisting of a plurality of rows and columns. In a two-dimensional table, a point at which a row and a column intersect is referred to as a code point. Each code point is allocated with a unique number referred to as a code point value or code point number. Generally, each code point corresponds to one character. The code point may also be understood as a binary number corresponding to a character in unicode, for example, U+1F3FB.

A code segment is a range from a specified lower-limit code point value to an upper-limit code point value.

Single unicode: Code points of an emoji (emoji) include a single layer, for example, u1f60b of emoji_u1f60b.png. In embodiments of this application, an emoji corresponding to single unicode may be referred to as a single emoji.

Combined unicode: Code points that form an emoji include a plurality of layers, for example, u1f469_1f3fb_200d_1f33e of emoji_u1f469_1f3fb_200d_1f33e.png. In this embodiment of this application, an emoji corresponding to the combined unicode may be referred to as a combined emoji.

Unicode private area is a code segment (E000-F8FF) range specified by the unicode standard and determined by a private agreement between partners, and is also referred to as a self-created character area.

UTF-8 is an encoding mode for unicode characters with variable lengths.

A font file (True Type Font, ttf) is a font file representation mode.

A bin file is a binary file. In embodiments of this application, a binary file corresponding to an emoji is emoji.bin.

Embodiments of this application may be applied to a scenario in which content is displayed on a display of an electronic device. An example in which the electronic device is a smartwatch and content displayed by the electronic device is an emoji is used below for description. However, this should not limit a scenario to which embodiments of this application can be applied.

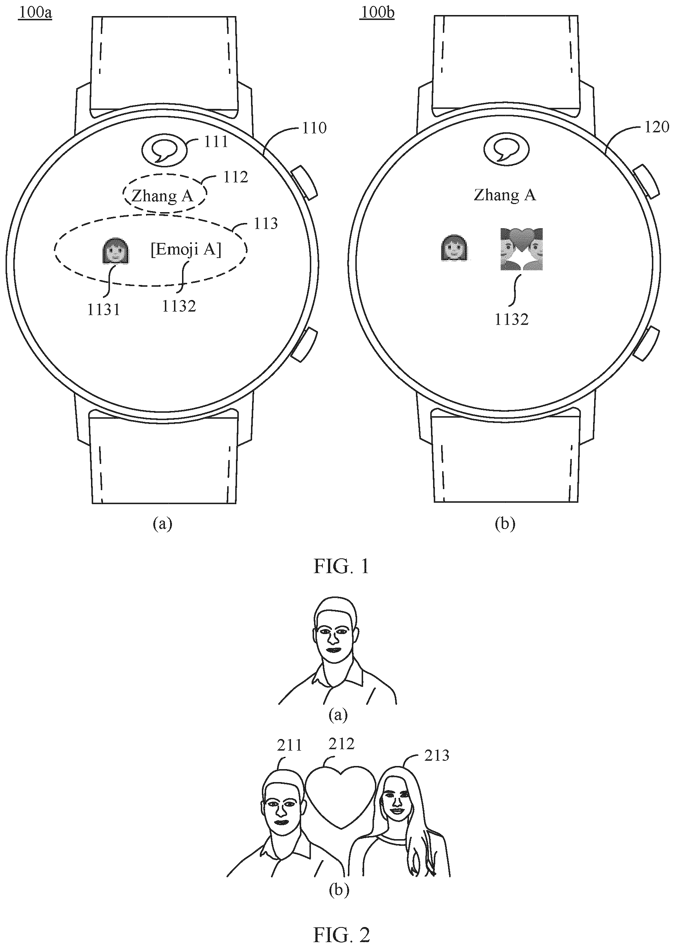

FIG. 1 is a diagram of a scenario to which an embodiment of this application is applicable. For example, in a current smartwatch 100a, when a mobile phone of a user receives an SMS message or an instant message, the mobile phone may push related content of the SMS message or the instant message to the smartwatch 100a for display, so that the user quickly views the message.

Refer to (a) in FIG. 1, the mobile phone receives a short message sent by a contact Zhang A by using a short message application, where the short message may include an emoji 1 and an emoji 2. The mobile phone may push related information of the SMS message to the smartwatch 100a. In this case, the smartwatch 100a may display, in a display interface 110, an icon 111 of the SMS message application, the contact Zhang A112, and specific content of the SMS message. Currently, the smartwatch 100a only supports display of a single emoji, and does not support display of a combined emoji. Therefore, a single emoji 1131 and a name [Emoji A] 1132 of the combined emoji may be displayed in the display interface 110. In some examples, emojis may be classified into a single emoji and a combined emoji. Refer to FIG. 2. FIG. 2 is a diagram of an emoji according to an embodiment of this application.

As shown in (a) in FIG. 2, an emoji 211 may correspond to a code point, and such an emoji may be referred to as a single emoji. For example, a code point corresponding to the emoji 211 is U+1F468.

As shown in (b) in FIG. 2, an emoji B is formed by combining the emoji 211, an emoji 212, and an emoji 213. Correspondingly, the emoji B may correspond to a plurality of code points, and such an emoji may be referred to as a combined emoji. For example, the code point corresponding to the emoji 211 is U+1F468, a code point corresponding to the emoji 212 is U+1F469, and a code point corresponding to the emoji 213 is U+1F467. In this case, the emoji B may be represented as U+1F468 U+200D U+1F469 U+200D U+1F467, where U+200D represents a connector.

In some other examples, the combined emoji may alternatively be formed by the emoji 211, the emoji 212, and some attributes of the emoji 211. Alternatively, the combined emoji may alternatively be a combination of the emoji 211 and some attributes of the emoji 211. For example, the attribute may be a quantity, a gender, or the like.

Because one emoji 211 may independently represent one single emoji, and may also form a combined emoji together with another emoji. Therefore, for the emoji 211, a code point corresponding to the emoji 211 may correspond to a plurality of emojis. Therefore, for the electronic device, when receiving data including the emoji 211, the electronic device needs to further parse the data to determine a target emoji corresponding to the data. This causes large occupation of a running memory of the electronic device. When electronic devices are some lightweight wearable devices, a running memory of the electronic device is small, and may not support a current technical solution of displaying a combined emoji.

In view of this, embodiments of this application provide a display method and an electronic device. In the technical solution, a combination of a plurality of code points corresponding to a combined emoji may be mapped in advance to a unique private area code point, and then a mapping relationship is stored in a font file and pre-stored in the electronic device. Therefore, when data of an emoji is received, a unique private area code point may be used to replace a plurality of code points of a combined emoji, to implement display of the combined emoji. This avoids memory overheads caused by parsing a plurality of mapping relationships when the electronic device displays the combined emoji. The technical solution may cause the electronic device to occupy a small memory when the combined emoji is displayed.

Refer to (b) in FIG. 1. After the technical solution of this application is used, a combined emoji 1132 may be displayed on a display interface 120 of a smartwatch 100b.

It should be understood that, in this embodiment of this application, the smartwatch 100a may establish a connection relationship with the mobile phone in advance. When receiving a corresponding message, the mobile phone may push the message to the smartwatch 100a for display.

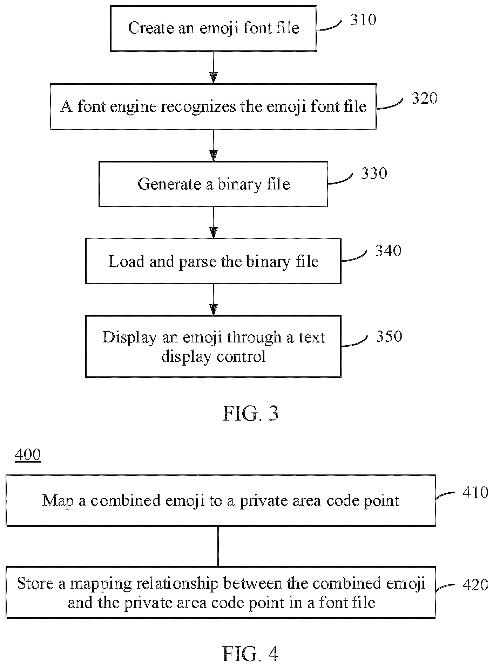

FIG. 3 is a schematic flowchart of displaying an emoji according to an embodiment of this application.

310: Create an emoji font file.

For example, the emoji font file may be a ttf file. When the ttf file is created, a mapping relationship between a single emoji and a code point and a mapping relationship between a combined emoji and a private area code point may be stored in the ttf file. In this way, display of all single emojis and combined emojis can be implemented.

For example, there may be 1000 single emojis, and there may be 2000 combined emojis.

It should be understood that, because one combined emoji is formed by combining a plurality of code points, the combination of the plurality of code points may be mapped to one private area code point in advance. Then, a mapping relationship between a combination of a plurality of code points of a combined emoji and a private area code point is stored in the ttf file.

For example, if a combination of a plurality of code points of a combined emoji A1 is A1_B1_C1, A1_B1_C1 may be mapped to a private area code point E1. Then, a mapping relationship between A1_B1 C1 and E1 is stored in the ttf file.

The emoji font file may be harmony emoji.ttf used for allocating a code segment to a Harmony application, or may be notocolor emoji.ttf used for allocating a code segment to an Android application, or may be a ttf file used to allocate a code segment to another operating system or application. This is not limited in embodiments of this application.

320: A font engine recognizes the emoji font file.

For example, the font engine may be a freetype library. The font engine may access the ttf file through an interface, rasterize the ttf file, and map the ttf file to a bitmap (bitmap) file.

330: A text font library packaging tool (font tool) packs the bitmap file to generate a binary bin file.

It should be understood that the text font library packaging tool needs to support a bitmap mode. An emoji font file may define a fixed size, and an emoji of another size may be obtained through scaling, to improve flexibility of emoji display.

For example, the binary file may be named as an emoji.bin file.

It should be understood that the binary file may be pre-stored in an electronic device.

340: A font manager (font manager) loads and parses the binary file.

It should be understood that, when actually displaying an emoji, the electronic device needs to transfer, to the font manager, the emoji that specifically needs to be displayed, so that the font manager may load and parse a binary file of a font file to obtain the corresponding emoji, and transfer the emoji to a text display control.

350: Display the emoji through the text display control.

For example, the text display control may be a user interface label (user interface label, UI label) or a user interface text (user interface text, UI text), and the corresponding emoji may be displayed in a display interface through the text display control.

It should be understood that the electronic device may display the emoji when needed. For example, if the electronic device is a smartwatch, when the smartwatch receives a message pushed by a mobile phone, if the message includes an emoji, the smartwatch may display the emoji on a display interface through the text display control. It should be understood that the message may further include other text information, and the smartwatch may normally display the text information.

In embodiments of this application, because the emoji font file includes the mapping relationship between a single emoji and a code point and the mapping relationship between a combined emoji and a private area code point, a unique mapping relationship between an emoji and a code point can be ensured. Therefore, memory overheads caused by parsing a plurality of mapping code segments when the electronic device displays an emoji can be avoided.

The following describes the technical solution of creating the emoji font file in step 310 with reference to FIG. 4.

FIG. 4 is a schematic flowchart of a font file creating method according to an embodiment of this application. As shown in FIG. 4, the method 400 may include step 410 and step 420.

410: Map a combined emoji to a private area code point.

A code segment range of a private area may be E000 to F8FF.

In an example, the combined emoji is formed by an emoji A, an emoji B, and an emoji C, a code point corresponding to the emoji A is U+1F468, a code point corresponding to the emoji B is U+1F469, and a code point corresponding to the emoji C is U+1F466. Therefore, there are three code points corresponding to the combined emoji, which are respectively U+1F468, U+1F469, and U+1F466. In this embodiment of this application, a combination of the three code points corresponding to the combined emoji may be mapped to one code point A in the private area, and an emoji corresponding to the code point A is the combined emoji.

For example, if a combination of a plurality of code points corresponding to the combined emoji is U+1F468 U+200D U+1F469 U+200D U+1F466, the combination U+1F468 U+200D U+1F469 U+200D of the plurality of code points is mapped to a private area code point U+E171.

In some other examples, the combined emoji may be formed by an emoji A, an emoji B, and some attributes of the emoji A. For example, the attribute may be a quantity, a gender, or the like.

It should be understood that, because there may be a plurality of combined emojis, a plurality of code points corresponding to the plurality of combined emojis may be respectively mapped to code points in the private area. For example, after mapping, a combined emoji A corresponds to a code point A in the private area, a combined emoji B corresponds to a code point B in the private area, ..., and a combined emoji N corresponds to a code point N in the private area.

It should be understood that a specific mapping manner in which a combination of a plurality of code points corresponding to a combined emoji is mapped to one private area code point is not limited in embodiments of this application. For example, the mapping manner may be a one-to-one mapping manner, a key-value pair mapping manner, or the like.

Through step 410, one combined emoji may be mapped to one private area code point, and the combined emoji is in a one-to-one correspondence with the private area code point.

420: Store a mapping relationship between the combined emoji and the private area code point in a font file.

For example, the combined emoji and the private area code point are stored in the font file in a key-value pair. The font file may be the foregoing ttf file.

In some other embodiments, the font file may further include a mapping relationship between a single emoji and a code point, so that the font file may include the mapping relationship between a single emoji and a code point and a mapping relationship between a combined emoji and a code point. This facilitates subsequent display of all emojis.

In this embodiment of this application, a plurality of code points that form a combined emoji may be mapped to one private area code point, to ensure a one-to-one correspondence between the combined emoji and the code point. In this way, memory overheads caused by parsing a plurality of mapping code segments when an electronic device displays the combined emoji can be avoided, and a combined emoji is uniquely determined based on a current code point, so that memory overheads for displaying the combined emoji can be reduced.

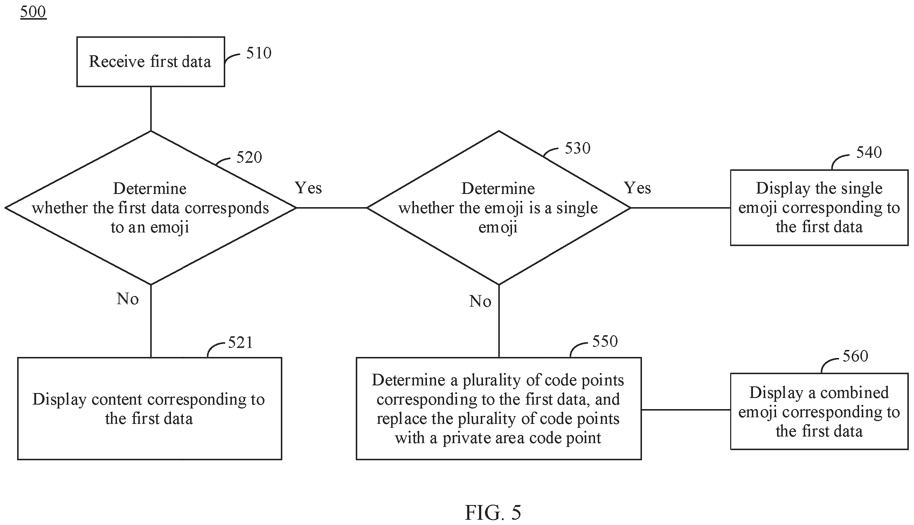

With reference to FIG. 5, the following describes a processing process in a case in which a smartwatch receives data sent by a mobile phone in an embodiment of this application. It should be understood that a font file of the smartwatch in this embodiment of this application may pre-store a mapping relationship between an emoji and a code point, including a mapping relationship between a single emoji and a code point and a mapping relationship between a plurality of code points of a combined emoji and a private area code point. The mapping relationship between a plurality of code points of a combined emoji and a private area code point may be further pre-stored in code of the smartwatch.

FIG. 5 is a schematic flowchart of a display method according to an embodiment of this application. As shown in FIG. 5, the method 500 may include step 510 to step 560.

510: Receive first data.

For example, the method 500 may be applied to a smartwatch. The first data may be sent to the smartwatch by a mobile phone connected to the smartwatch.

In an example, the first data may be UTF-8 encoded data. Any information received by the smartwatch from the mobile phone, such as a text, an emoji, or a picture, may be presented in a form of UTF-8 encoded data. After receiving the UTF-8 encoded data, the smartwatch may convert the UTF-8 encoded data into a corresponding unicode code point according to a rule, and further determine, based on the unicode code point, specific content that needs to be displayed.

In some other examples, the first data may alternatively be UTF-16 or UTF-32 encoded data. This is not limited in embodiments of this application.

520: Determine whether the first data corresponds to an emoji.

After receiving the first data, the smartwatch may first determine whether the first data corresponds to an emoji.

For example, the first data is UTF-8 encoded data, and the smartwatch may convert the UTF-8 encoded data into a unicode code point. An emoji has a corresponding code segment range. Therefore, whether the first data corresponds to the emoji may be determined based on whether the code point converted from the first data falls within the code segment range of the emoji.

In a possible implementation, if the code point converted from the first data is not within the code segment range of the emoji, it may be determined that the first data does not correspond to the emoji, and step 521 may be performed.

In another possible implementation, if the code point converted from the first data falls within the code segment range of the emoji, it may be determined that the first data corresponds to the emoji, and step 530 may be performed.

In some other examples, the first data is UTF-8 encoded data, and the smartwatch may determine, based on a quantity of bits of UTF-8, whether the first data corresponds to an emoji.

In some other examples, the first data may further include identification information, and the identification information may indicate that the first data is an emoji.

521: Display content corresponding to the first data.

If it is determined that the first data does not correspond to an emoji, the content corresponding to the first data may be normally displayed. If the content corresponding to the first data is a text, the smartwatch may display the corresponding content through a text display control.

For example, if the content corresponding to the first data is a text, a font manager in the smartwatch may load and parse a binary file of the text, and display the binary file on a display interface of the smartwatch through the text display control.

530: Determine whether the emoji corresponding to the first data is a single emoji.

In emojis, a quantity of single emojis may be greater than a quantity of combined emojis. To shorten time for searching for the emoji, it may be preferentially determined whether the emoji is a single emoji. If the smartwatch determines that the content corresponding to the first data is an emoji, the smartwatch may first determine whether the emoji is a single emoji.

For example, if the smartwatch stores a table A of all single emojis and corresponding code points, a code point of the emoji corresponding to the first data may be matched with the table A.

In a possible implementation, when data is matched from the table A, it may be determined that the emoji corresponding to the first data is a single emoji, and step 540 may be performed.

In another possible implementation, when no data is matched from the table A, it may be determined that the emoji corresponding to the first data is a combined emoji, and step 560 may be performed.

540: Display the single emoji corresponding to the first data.

For example, the font manager in the smartwatch loads and parses a binary file of a font file to obtain the corresponding single emoji, and displays the single emoji in the display interface of the smartwatch through the text display control. For a manner in which the smartwatch displays the single emoji corresponding to the first data, refer to the foregoing related descriptions of step 340 and step 350.

550: Determine a plurality of code points corresponding to the first data, and replace the plurality of code points with a private area code point.

For example, the smartwatch stores a table B of a mapping relationship between a plurality of code points of all combined emojis and private area code points. If it is determined that the emoji corresponding to the first data is a combined emoji, a corresponding private area code point may be obtained from the table B based on the plurality of code points corresponding to the first data, and the plurality of code points corresponding to the first data are replaced with the private area code point.

560: Display the combined emoji corresponding to the first data.

It should be understood that, in this step, the private area code point may be transmitted to the font manager, and the font manager loads and parses the binary file of the font file, determines the corresponding combined emoji based on the private area code point, and displays the combined emoji in the display interface of the smartwatch through the text display control.

It should be understood that, because the binary file of the font file includes the mapping relationship between a plurality of code points of a combined emoji and a private area code point, the font manager may determine the corresponding combined emoji based on the private area code point.

In an embodiment of this application, a mapping relationship of mapping a plurality of code points of a combined emoji to a unique private area code point is pre-stored in the smartwatch, so that the combined emoji has a unique mapping relationship with the private area code point. When receiving data, the smartwatch may first parse the data to determine whether the data corresponds to an emoji. When determining that the data corresponds to an emoji, the smartwatch further determines whether the emoji is a single emoji. When determining that the emoji is a single emoji, the smartwatch displays the single emoji normally. When determining that the emoji is not a single emoji, the smartwatch may replace a plurality of code points of a combined emoji with a private area code point based on the mapping relationship, so that the corresponding combined emoji may be determined based on the private area code point, and the combined emoji is displayed on the display interface of the smartwatch through the text display control. According to the technical solution, when the combined emoji is displayed, memory overheads caused by parsing a plurality of mapping code segments can be avoided, so that all emojis can be displayed in the smartwatch with low memory occupation.

In some cases, because quantities of code points corresponding to combined emojis are different, lengths of UTF-8 encoded data of different combined emojis may be different. To meet memory occupation, memory space of a same size is allocated to each combined emoji. As a result, some UTF-8 encoded data does not fill up memory space allocated to the UTF-8 encoded data, and a part of the memory space is wasted.

To further reduce memory occupation of the smartwatch, in this embodiment of this application, when a memory is actually applied for a plurality of code points corresponding to a combined emoji, the smartwatch writes UTF-8 encoded data of each combined emoji into a global variable. Each private area code point corresponds to one pointer, and the pointer may be used to point to address information of UTF-8 encoded data of one combined emoji. In addition, a mapping relationship between a private area code point and a pointer is stored in a mapping table. When displaying the combined emoji, the smartwatch may access the corresponding UTF-8 encoded data through the pointer. Therefore, the mapping table does not need to store specific UTF-8 encoded data of a combined emoji, to reduce memory occupation of the smartwatch.

In some examples, when the electronic device currently displays a combined emoji, running memory occupation of the electronic device is at a megabyte (Mbyte, MB) level. However, according to the display method in this embodiment of this application, all emojis can be displayed by using about 44 kilobytes (Kilobyte, KB) of memory consumption of a read-only memory (read-only memory, ROM). According to this technical solution, memory occupation of the electronic device for displaying an emoji is reduced.

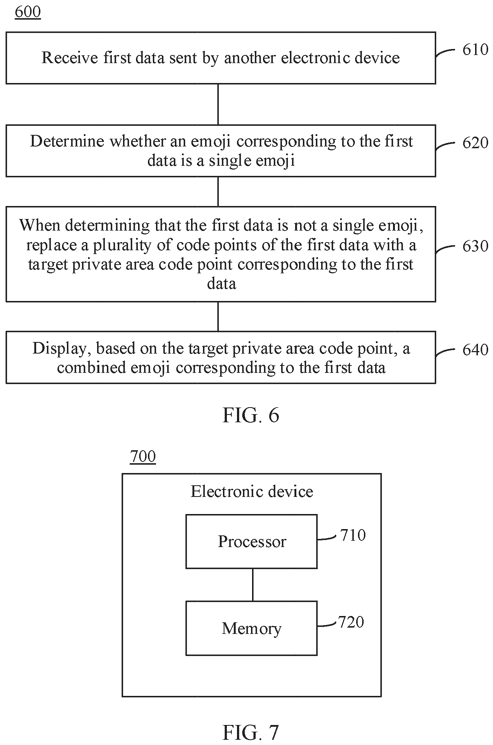

FIG. 6 is a schematic flowchart of a display method according to an embodiment of this application. As shown in FIG. 6, the method 600 may be applied to an electronic device, where the electronic device stores a one-to-one mapping relationship between an emoji and a code point, and the method 600 may include step 610 to step 640.

610: The electronic device receives first data sent by another electronic device.

For example, the electronic device may be a smartwatch, and the another electronic device may be a mobile phone.

The first data may be UTF-8 encoded data corresponding to a text, an emoji, a picture, or the like. Alternatively, the first data may be UTF-16 or UTF-32 encoded data corresponding to a text, an emoji, a picture, or the like. This is not limited in this embodiment of this application. In this embodiment of this application, an example in which the first data is UTF-8 encoded data is used for description.

620: The electronic device determines whether an emoji corresponding to the first data is a single emoji.

For example, if the first data corresponds to an emoji, the electronic device may determine whether the emoji is a single emoji.

For example, if the first data is UTF-8 encoded data, the electronic device may perform matching between a first bit of UTF-8 encoded data of the first data and table A of a code point corresponding to the single emoji.

In a possible implementation, when data is matched from the table A, it may be determined that the emoji corresponding to the first data is a single emoji.

In another possible implementation, when no data is matched from the table A, it may be determined that the emoji corresponding to the first data is not a single emoji but a combined emoji.

It should be understood that table A may alternatively be represented as a mapping relationship instead of a specific table.

Because the first data may include a plurality of bits of UTF-8 encoded data, determining is first performed from the first bit of UTF-8 encoded data of the first data, and if it is determined that the first bit of UTF-8 encoded data corresponds to a single emoji, the single emoji may be normally displayed. When it is determined that the first data does not correspond to a single emoji, which one of the combined emojis the first data belongs to is further determined. This helps the electronic device quickly match the target emoji, and reduces time for displaying the emoji.

630: When determining that the first data does not correspond to a single emoji, the electronic device replaces, with a target private area code point corresponding to the first data, a combination of a plurality of code points that form a combined emoji corresponding to the first data.

In step 630, when determining that the first data does not correspond to a single emoji, the electronic device may determine that the first data corresponds to the combined emoji.

As described above, the combined emoji may be formed by combining a plurality of code points, and the electronic device may replace the target private area code point corresponding to the first data with the combination of the plurality of code points that form the combined emoji. In this way, the electronic device may determine the corresponding combined emoji from a bottom layer based on the target private area code point.

640: The electronic device displays, based on the target private area code point, the combined emoji corresponding to the first data.

For example, a font manager in the electronic device determines, based on the target private area code point, a binary file of a font file that needs to be loaded and parsed, to obtain the combined emoji that needs to be displayed, and the corresponding combined emoji is displayed on a display interface through a text display control.

For example, refer to (b) in FIG. 1. The smartwatch 100b displays the combined emoji 1132 in the display interface 120.

In an embodiment of this application, the electronic device stores the one-to-one mapping relationship between an emoji and a code point, so that an emoji and a code point are in a one-to-one correspondence. In this way, when receiving the first data, the electronic device may uniquely determine a corresponding emoji based on a code point. This avoiding overheads of a running memory caused by parsing a plurality of code segments when the electronic device displays the combined emoji.

In this embodiment of this application, after receiving the first data, the electronic device may first determine whether the emoji corresponding to the first data is a single emoji. When determining that the emoji is not a single emoji, the electronic device replaces, with the target private area code point corresponding to the first data, the combination of the plurality of code points that form the combined emoji corresponding to the first data, so that the electronic device may determine, based on the target private area code point, the combined emoji that needs to be displayed, and display the combined emoji. In this technical solution, the combined emoji may be uniquely determined based on the private area code point. This can avoid overheads of a running memory caused by parsing a plurality of code segments when the electronic device displays the combined emoji, and can reduce memory overheads caused when the electronic device displays the combined emoji.

In some embodiments, before the combination of the plurality of code points that form the combined emoji corresponding to the first data is replaced with the target private area code point corresponding to the first data, the method 600 may further include:
determining, from a first mapping relationship between a combination of a plurality of code points corresponding to a combined emoji and a private area code point, the target private area code point corresponding to the first data, where the first mapping relationship is preset in the electronic device.

In this embodiment of this application, the electronic device may pre-store the first mapping relationship between a combination of a plurality of code points corresponding to a combined emoji and a private area code point. For example, the first mapping relationship is stored in code of the electronic device. In this case, the electronic device may determine, from the first mapping relationship, the target private area code point corresponding to the first data.

In some embodiments, the mapping relationship includes a second mapping relationship between a single emoji and a code point and a third mapping relationship between a combination of a plurality of code points that form a combined emoji and a private area code point, and the mapping relationship is preset in a font file of the electronic device.

In this embodiment of this application, the font file of the electronic device includes a mapping relationship between a single emoji and a code point, and a mapping relationship between a combination of a plurality of code points that form a combined emoji and a private area code point. Therefore, the electronic device may include one-to-one mapping relationships between all emojis and code points, so that the electronic device can display all emojis.

In some embodiments, that the electronic device displays, based on the target private area code point, the combined emoji corresponding to the first data includes:
the electronic device determines the combined emoji based on the target private area code point and the first mapping relationship.

The electronic device displays the combined emoji.

For example, the electronic device may perform matching, based on the target private area code point and the mapping relationship between a combination of a plurality of code points corresponding to a combined emoji and the private area code point, to determine a plurality of code points corresponding to the combined emoji, to determine the combined emoji.

In some embodiments, the method 600 may further include the following step:
the electronic device replaces, with a first pointer, the combination of the plurality of code points of the combined emoji corresponding to the first data in the first mapping relationship.

That the electronic device determines the combined emoji based on the target private area code point and the first mapping relationship includes:
the electronic device determines the combined emoji based on the address information pointed to by the first pointer.

In this embodiment of this application, the electronic device may write UTF-8 encoded data of each combined emoji into a global variable, each private area code point corresponds to a pointer, and the pointer may be used to point to address information of UTF-8 encoded data of one combined emoji, and stores a mapping between the private area code point and the pointer. When displaying the combined emoji, the electronic device may access the corresponding UTF-8 encoded data through the pointer. Therefore, there is no need to store UTF-8 encoded data of a specific combined emoji. This reduces memory occupation of the electronic device.

In some embodiments, when the electronic device determines that the emoji corresponding to the first data is a single emoji, the method 600 may further include:
the electronic device determines the single emoji based on a code point corresponding to the first data and the second mapping relationship.

The electronic device displays the single emoji.

In this embodiment of this application, the electronic device further stores the second mapping relationship between a single emoji and a code point. When determining that the first data corresponds to the single emoji, the electronic device may further display the single emoji. In this technical solution, the electronic device may display both a single emoji and a combined emoji.

In some embodiments, before the electronic device determines whether the emoji corresponding to the first data is a single emoji, the method 600 may further include:
determining, based on a code segment range corresponding to the first data, that the first data corresponds to an emoji.

For example, the emoji has a code segment range corresponding to the emoji. When the first data falls within the code segment range, it may be determined that the first data corresponds to the emoji.

In this embodiment of this application, after receiving the first data, the electronic device may first determine whether the first data corresponds to the emoji. This facilitates subsequent emoji display.

In some embodiments, before that the electronic device receives first data sent by another electronic device, the method 600 further includes:
the electronic device maps the combination of the plurality of code points that form the combined emoji to the private area code point; and
the electronic device presets, into the font file of the electronic device, the second mapping relationship of mapping the combination of the plurality of code points that form the combined emoji to the private area code point.

For example, refer to FIG. 4. The electronic device may map a combination of a plurality of code points corresponding to one combined emoji to one private area code point, to implement unique mapping between the combined emoji and the private area code point, therefore, the electronic device can quickly and uniquely determine the combined emoji.

It should be understood that all mapping tables in embodiments of this application may be replaced with mapping relationships. This is not limited in embodiments of this application.

FIG. 7 is a block diagram of an electronic device according to an embodiment of this application. As shown in FIG. 7, the electronic device 700 may include one or more processors 710 and one or more memories 720. The one or more memories 720 store one or more computer programs, and the one or more computer programs include instructions, so that the display methods in the foregoing embodiments are performed.

For example, the electronic device 700 may be a smartwatch, an Internet of Things device, or the like.

An embodiment of this application further provides a display apparatus, including modules configured to perform the display methods in the foregoing embodiments.

For example, the display apparatus may be a smartwatch, an Internet of Things device, or the like.

An embodiment of this application further provides a chip. The chip includes a processor and a communication interface. The communication interface is configured to receive a signal and transmit the signal to the processor, and the processor processes the signal, so that the display methods in the foregoing embodiments are performed.

An embodiment of this application further provides a computer-readable storage medium. The computer-readable storage medium stores computer instructions, and when the computer instructions are run on a computer, the display methods in the foregoing embodiments are performed.

An embodiment of this application further provides a computer program product. The computer program product includes computer program code. When the computer program code is run on a computer, the display methods in the foregoing embodiments are performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are only specific implementations of this application, but are not intended to limit the protection scope of this application. Any variation or replacement readily figured out by a person skilled in the art in the technical scope disclosed in this application shall fall in the protection scope of this application. Therefore, the protection scope of this application shall be subject to the protection scope of the claims.

## Claims

1. A display method, wherein the method is applied to an electronic device, a one-to-one mapping relationship between an emoji and a code point is preset in the electronic device, and the method comprises:
receiving, by the electronic device, first data sent by another electronic device;
determining, by the electronic device, whether an emoji corresponding to the first data is a single emoji;
when determining that the first data does not correspond to a single emoji, replacing, by the electronic device with a target private area code point corresponding to the first data, a combination of a plurality of code points that form a combined emoji corresponding to the first data; and
displaying, by the electronic device based on the target private area code point, the combined emoji corresponding to the first data.

2. The method according to claim 1, wherein before the replacing, with a target private area code point corresponding to the first data, a combination of a plurality of code points that form a combined emoji corresponding to the first data, the method further comprises:
determining, by the electronic device from a first mapping relationship between a combination of a plurality of corresponding code points that form a combined emoji and a private area code point, the target private area code point corresponding to the first data, wherein the first mapping relationship is preset in the electronic device.

3. The method according to claim 1 or 2, wherein the mapping relationship comprises a second mapping relationship between a single emoji and a code point and a third mapping relationship between a combination of a plurality of code points that form a combined emoji and a private area code point, and the mapping relationship is preset in a font file of the electronic device.

4. The method according to claim 1 or 2, wherein the displaying, by the electronic device based on the target private area code point, the combined emoji corresponding to the first data comprises:
determining, by the electronic device, the combined emoji based on the target private area code point and the first mapping relationship; and
displaying, by the electronic device, the combined emoji.

5. The method according to claim 4, wherein the method further comprises:
replacing, by the electronic device with a first pointer, the combination of the plurality of code points of the combined emoji corresponding to the first data in the first mapping relationship; and
the determining, by the electronic device, the combined emoji based on the target private area code point and the first mapping relationship comprises:
determining, by the electronic device, the combined emoji based on address information pointed to by the first pointer.

6. The method according to claim 3, wherein when the electronic device determines that the emoji corresponding to the first data is a single emoji, the method further comprises:
determining, by the electronic device, the single emoji based on a code point corresponding to the first data and the second mapping relationship; and
displaying, by the electronic device, the single emoji.

7. The method according to any one of claims 1 to 6, wherein before the determining, by the electronic device, whether an emoji corresponding to the first data corresponds to a single emoji, the method further comprises:
determining, based on a code segment range corresponding to the first data, that the first data corresponds to an emoji.

8. The method according to claim 3, wherein before the receiving, by the electronic device, first data sent by another electronic device, the method further comprises:
mapping, by the electronic device, the combination of the plurality of code points that form the combined emoji to the private area code point; and
presetting, by the electronic device into the font file of the electronic device, the second mapping relationship of mapping the combination of the plurality of code points that form the combined emoji to the private area code point.

9. An electronic device, comprising one or more processors and one or more memories, wherein the one or more memories store one or more computer programs, the one or more computer programs comprise instructions, and when the instructions are executed by the one or more processors, the display method according to any one of claims 1 to 8 is performed.

10. An electronic device, comprising a module configured to implement the display method according to any one of claims 1 to 8.

11. The electronic device according to claim 9 or 10, wherein the electronic device is a smartwatch.

12. A chip, wherein the chip comprises a processor and a communication interface, the communication interface is configured to: receive a signal, and transmit the signal to the processor, and the processor processes the signal, so that the display method according to any one of claims 1 to 8 is performed.

13. A computer-readable storage medium, wherein the computer-readable storage medium stores computer instructions, and when the computer instructions are run on a computer, the display method according to any one of claims 1 to 8 is performed.
